(19) Europäisches Patentamt
European Patent Office
Office européen des brevets

(11) EP 3 217 569 A1

(12) EUROPEAN PATENT APPLICATION
published in accordance with Art. 153(4) EPC

(43) Date of publication:
13.09.2017 Bulletin 2017/37

(51) Int Cl.:
H04B 7/08 (2006.01)

(21) Application number: 14905370.4

(22) Date of filing: 07.11.2014

(86) International application number:
PCT/CN2014/090646

(87) International publication number:
WO 2016/070428 (12.05.2016 Gazette 2016/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Fujitsu Limited
Kawasaki-shi, Kanagawa 211-8588 (JP)

(72) Inventors:
• ZHANG, Yi
  Beijing 100025 (CN)
• ZHOU, Hua
  Beijing 100025 (CN)

(74) Representative: Fenlon, Christine Lesley
Haseltine Lake LLP
Lincoln House, 5th Floor
300 High Holborn
London WC1V 7JH (GB)

(54) **METHOD AND APPARATUS FOR INDICATING DM-RS INFORMATION, AND COMMUNICATION SYSTEM**

(57) A method and apparatus for indicating DM-RS information and a communication system, applicable to a 3D MIMO system. The method includes: transmitting, by a base station, signaling indicating DM-RS information to UE. Hence, the UE may support high-dimension MU-MIMO according to the signaling.

Step 401, Transmitting, by a base station, signaling indicating DM-RS information to UE, so that the UE supports high-dimension MU-MIMO according to the signaling

Fig. 4

**Description**

Technical Field

This disclosure relates to the field of communication technologies, and in particular to a method and apparatus for indicating demodulation reference signal (DM-RS) information in a three-dimensional (3D) multiple input multiple output (MIMO) system and a communication system.

Background

As development of antenna technologies, a two-dimensional active antenna array may be arranged at a transmitting device, and three-dimensional beams may be formed by flexible weighting of antenna coefficients. The three-dimensional multi-antenna technology is able to improve antenna gains, reduce beam widths and reduce interference on the one hand, and on the other hand, it may improve multiplexing efficiency of system by spatially multiplexing more pieces of user equipment (UE). Hence, the three-dimensional multi-antenna technology may outstandingly improve transmission efficiency and reliability of the system, and is a hot candidate technology for the future mobile communication system.

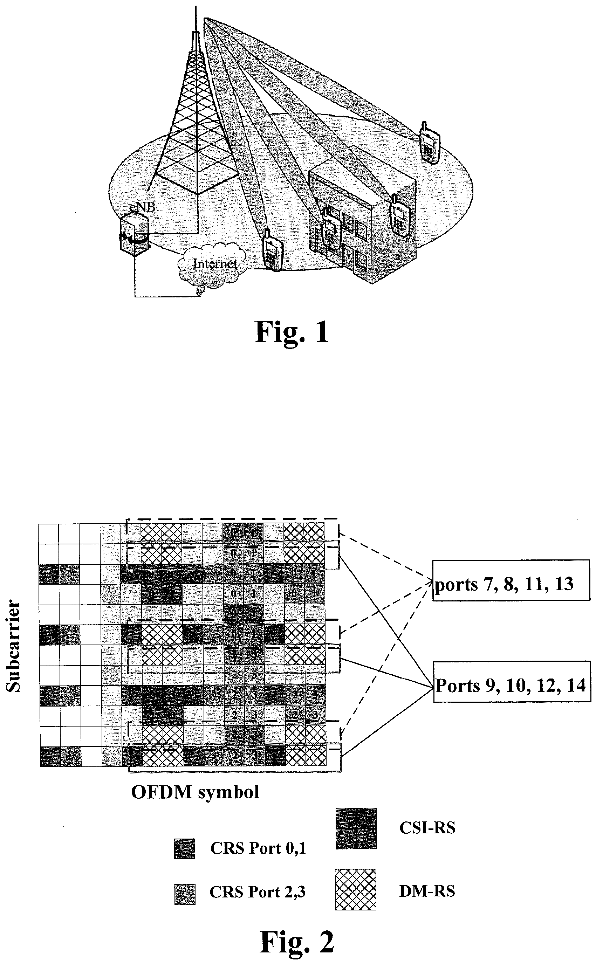

Compared with the two-dimensional multi-antenna technology, the three-dimensional multi-antenna technology has better spatial separation, and is able to support more user equipment multiplexing transmission. FIG. 1 is a schematic diagram of multiple-user MIMO (MU-MIMO) in 3D MIMO. As shown in FIG. 1, the 3D multi-antenna system is added with a vertical dimension, and the number of dimensions of MU-MIMO that can be supported by the system may further be increased.

It should be appreciated that the above description of the background is merely provided for clear and complete explanation of this disclosure and for easy understanding by those skilled in the art. And it should not be understood that the above technical solution is known to those skilled in the art as it is described in the background of this disclosure.

Summary

Currently, in an existing long term evolution (LTE) system, in consideration of a tradeoff between the system performance gain and reference signal overhead, dimensions of the MU-MIMO that are supported by the system are limited, each piece of user equipment supports transmission of a maximum rank of 2, and a maximum sum rank of the MU-MIMO is 4. In order to support transmission of high-dimensional MU-MIMO, DM-RS-related information needs to be enhanced to ensure reliable demodulation of data.

Embodiments of this disclosure provide a method and apparatus for indicating DM-RS information and a communication system, in which by transmitting signaling indicating DM-RS information by a base station to UE, the UE is enabled to support high-dimension MU-MIMO according to the signaling.

According to a first aspect of the embodiments of this disclosure, there is provided a method for indicating DM-RS information, applicable to a 3D MIMO system, the method including:

transmitting, by a base station, signaling indicating DM-RS information to UE, so that the UE supports high-dimension MU-MIMO according to the signaling.

According to a second aspect of the embodiments of this disclosure, there is provided an apparatus for indicating DM-RS information, applicable to a 3D MIMO system, the apparatus including:

a signaling transmitting unit configured to transmit signaling indicating DM-RS information to UE, so that the UE supports high-dimension MU-MIMO according to the signaling.

According to a third aspect of the embodiments of this disclosure, there is provided a communication system, including:

a base station configured to transmit signaling indicating DM-RS information to UE, so that the UE supports high-dimension MU-MIMO according to the signaling.

According to another first aspect of the embodiments of this disclosure, there is provided a computer readable program code, which, when executed in a base station, will cause a computer unit to carry out the method for indicating DM-RS information as described above in the base station.

According to a further aspect of the embodiments of the present disclosure, there is provided a computer readable medium, including a computer readable program code, which will cause a computer unit to carry out the method for indicating DM-RS information as described above in a base station.

An advantage of the embodiments of this disclosure exists in that by transmitting signaling indicating DM-RS information by a base station to UE, the UE is enabled to support high-dimension MU-MIMO according to the signaling.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated or reduced.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

FIG. 1 is a schematic diagram of multiple-user MIMO in 3D MIMO;
FIG. 2 is a schematic diagram of a DM-RS resource in an existing standard;
FIG. 3 is a schematic diagram of a mapping relationship between a codeword and a layer in an LTE-A system;
FIG. 4 is a flowchart of a method for indicating DM-RS information of an embodiment of this disclosure;
FIG. 5 is another flowchart of a method for indicating DM-RS information of the embodiment of this disclosure;
FIG. 6 is a schematic diagram of supporting high-dimension MU-MIMO by increasing orthogonal sequences of an embodiment of this disclosure;
FIG. 7 is a schematic diagram of supporting high-dimension MU-MIMO by increasing orthogonal ports of an embodiment of this disclosure;
FIG. 8 is a schematic diagram of supporting high-dimension MU-MIMO by increasing orthogonal ports and increasing orthogonal sequences of an embodiment of this disclosure;
FIG. 9 is a schematic diagram of an apparatus for indicating DM-RS information of an embodiment of this disclosure;
FIG. 10 is a schematic diagram of a structure of a base station of an embodiment of this disclosure;
FIG. 11 is another schematic diagram of an apparatus for indicating DM-RS information of an embodiment of this disclosure;
FIG. 12 is a schematic diagram of a systematic structure of user equipment of an embodiment of this disclosure; and
FIG. 13 is a schematic diagram of a structure of a communication system of an embodiment of this disclosure.

Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

FIG. 2 is a schematic diagram of a DM-RS resource in an existing standard. As shown in FIG. 2, port 7, 8, 11 and 13 and ports 9, 10, 12 and 14 are respectively multiplexed in a code division manner, and are multiplexed therebetween in a frequency division manner. In performing multiple user transmission, each piece of user equipment only uses ports 7 and 8 at most, that is, only using resource elements of ▨ in a dotted frame in FIG. 2.

In the following embodiments, description is given taking 12 REs in a subframe (i.e. 12 REs in the dotted frame in FIG. 2, which correspond to ports 7 and 8 in the existing standards) as an example. For the convenience of the following description, the 12 REs in the subframe at the specific positions (i.e. the dotted frame) shown in FIG. 2 are only referred to as 12 REs in brief, and 24 REs in the subframe at the specific positions (i.e. the dotted frame and a solid frame) shown in FIG. 2 are referred to as 24 REs.

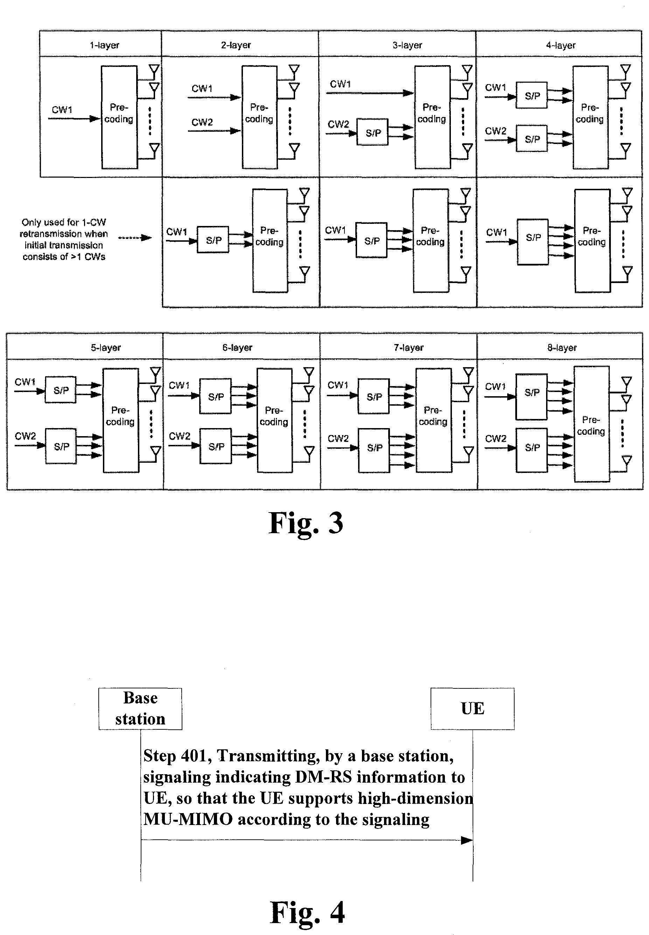

FIG. 3 is a schematic diagram of a mapping relationship between a codeword and a layer in an LTE-A system. As shown in IFG. 3, the system has two codewords (CWs) and eight layers at most, each codeword corresponding to four layers at most.

In downlink control information (DCI) 2C/2D of a control channel, indication on ports, scrambling sequences and numbers of layers is as shown in Table 1 below. Table 1 shows indication information on an antenna port, scrambling identity and the number of layers in the existing standard.

Table 1

| One codeword: codeword 0 is enabled, codeword 1 is disabled | | Two codewords: codeword 0 is enabled, codeword 1 is enabled | |
|---|---|---|---|
| Value | Message | Value | Message |
| 0 | 1 layer, port 7, nSCID=0 | 0 | 2 layers, ports 7-8, nSCID=0 |
| 1 | 1 layer, port 7, nSCID=1 | 1 | 2 layers, ports 7-8, nSCID=1 |
| 2 | 1 layer, port 8, nSCID=0 | 2 | 3 layers, ports 7-9 |
| 3 | 1 layer, port 8, nSCID=1 | 3 | 4 layers, ports 7-10 |
| 4 | 2 layers, ports 7-8 | 4 | 5 layers, ports 7-11 |
| 5 | 3 layers, ports 7-9 | 5 | 6 layers, ports 7-12 |
| 6 | 4 layers, ports 7-10 | 6 | 7 layers, ports 7-13 |
| 7 | Reserved | 7 | 8 layers, ports 7-14 |

As shown in Table 1, a base station may transmit the ports, scrambling identity and the number of layers to the user equipment via dynamic signaling of 3 bits, such that the user equipment performs channel estimation and demodulation with respect to DM-RS.

However, in order to support transmission of high-dimension MU-MIMO, the information shown in Table 1, for example, cannot satisfy the demands of the system, and the information on the DM-RS needs to be enhanced to ensure reliable demodulation of the data. The embodiments of this disclosure shall be described below in detail.

Embodiment 1

An embodiment of this disclosure provides a method for indicating DM-RS information, applicable to a 3D MIMO system. FIG. 4 is a flowchart of the method for indicating DM-RS information of an embodiment of this disclosure. As shown in FIG. 4, the method includes:

step 401: transmitting, by a base station, signaling indicating DM-RS information to UE, so that the UE supports high-dimension MU-MIMO according to the signaling.

In this embodiment, the high-dimension MU-MIMO may be supported by increasing orthogonal sequences used by the DM-RS by the base station, and may also be supported by increasing transmission resources used by the DM-RS by the base station; the high-dimension MU-MIMO may also be supported by informing related DM-RS information by the base station to the UE, so that the UE performs interference cancelling (IC) according to the related DM-RS information; and the high-dimension MU-MIMO may also be supported by informing the number of resources used by the DM-RS by the base station to the UE, so that the UE receives data according to the number of resources used by the DM-RS. Details are as described in the following embodiments.

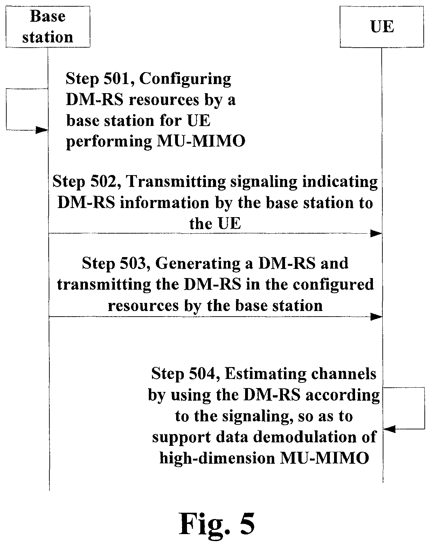

FIG. 5 is another flowchart of the method of the embodiment of this disclosure. As shown in FIG. 5, the method includes:

Step 501: configuring one or more DM-RS resources by a base station for UE performing MU-MIMO.

For example, orthogonal sequences used by the DM-RS may be increased, for example, values of nSCID are changed from 0, 1 into 0, 1, 2, 3; the DM-RS with orthogonal sequences being increased may be transmitted in a code division multiplexing (CDM) manner; furthermore, in performing mapping from a port to a resource, transmission resources used by the DM-RS may be increased, for example, ports used by the DM-RS are increased from 7, 8 to 7, 8, 9, 10; and the following embodiments may be referred to for detailed resource configuration contents.

Step 502: transmitting signaling indicating DM-RS information by the base station to the UE.

In this embodiment, after the base station increases the orthogonal sequences of the DM-RS or the transmission resources of the DM-RS to support high-dimension MU-MIMO, the base station may transmit related signaling to the UE, so that the UE performs corresponding operations to support the high-dimension MU-MIMO.

Step 503: generating a DM-RS and transmitting the DM-RS in the configured resources by the base station.

For example, the DM-RS may be transmitted by using relatively more orthogonal sequences, for example, values of nSCID are changed from 0, 1 into 0, 1, 2, 3; the DM-RS with orthogonal sequences being increased may be transmitted in a code division multiplexing (CDM) manner; furthermore, the DM-RS may be transmitted by using relatively more orthogonal ports, for example, ports used by the DM-RS are increased from 7, 8 to 7, 8, 9, 10; thus, the transmission resources used by the DM-RS may be increased; and the following embodiments may be referred to for detailed contents.

Step 504: estimating channels by the UE by using the DM-RS according to the signaling, so as to support data demodulation of the high-dimension MU-MIMO.

It can be seen from the above embodiment that by transmitting signaling indicating DM-RS information by the base station to the UE, the UE is enabled to support high-dimension MU-MIMO according to the signaling.

Embodiment 2

On the basis of Embodiment 1, an embodiment of this disclosure provides a method for indicating DM-RS information. In this embodiment, it is taken into consideration that spatial separation of UE in a 3D MIMO system will become better, and DM-RSs of relatively more pieces of UE may be multiplexed into identical resources via quasi-orthogonal sequences.

In this embodiment, the signaling is used to indicate that orthogonal sequences used by the DM-RS are increased.

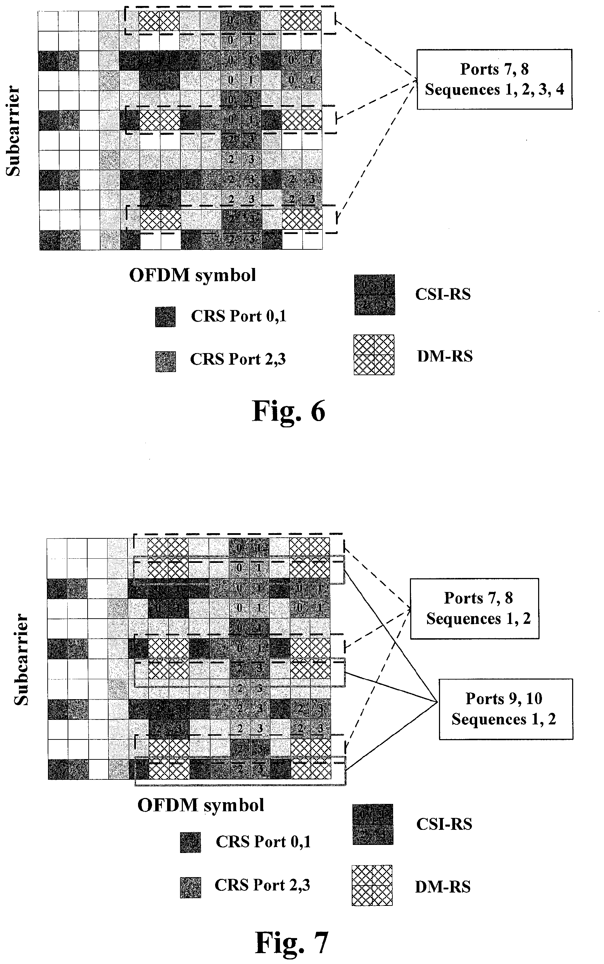

FIG. 6 is a schematic diagram of supporting the high-dimension MU-MIMO by increasing orthogonal sequences of the embodiment of this disclosure. As shown in FIG. 6, ports 7, 8 may correspond to, for example, four orthogonal sequences (1, 2, 3, 4).

As an example, the signaling may be dynamic signaling, information indicated by the dynamic signaling including a port, a number of layers and scrambling ID, the number of values of the scrambling ID being greater than 2.

In a case where MU-MIMO transmission is performed and a maximum number of streams supported by each piece of UE is less than or equal to 2, the information indicated by the dynamic signaling may include: the values of the scrambling ID are 0, 1, 2, 3 when one codeword is used, the number of layers is 1 and the port is 7; and the values of the scrambling ID are 0, 1, 2, 3 when one codeword is used, the number of layers is 1 and the port is 8.

Table 2 is an illustration table of related ports, scrambling sequences and the number of layers of the embodiment of this disclosure, which shows indication information on the antenna ports, scrambling identity and the number of layers in the embodiment of this disclosure; in which, a maximum rank of each piece of UE is 2.

Table 2

| One codeword: codeword 0 is enabled, codeword 1 is disabled | | Two codewords: codeword 0 is enabled, codeword 1 is enabled | |
|---|---|---|---|
| Value | Message | Value | Message |
| 0 | 1 layer, port 7, nSCID=0 | 0 | 2 layers, ports 7-8, nSCID=0 |
| 1 | 1 layer, port 7, nSCID=1 | 1 | 2 layers, ports 7-8, nSCID=1 |
| 2 | 1 layer, port 7, nSCID=2 | 2 | 3 layers, ports 7-9 |
| 3 | 1 layer, port 7, nSCID=3 | 3 | 4 layers, ports 7-10 |
| 4 | 1 layer, port 8, nSCID=0 | 4 | 5 layers, ports 7-11 |
| 5 | 1 layer, port 8, nSCID=1 | 5 | 6 layers, ports 7-12 |
| 6 | 1 layer, port 8, nSCID=2 | 6 | 7 layers, ports 7-13 |
| 7 | 1 layer, port 8, nSCID=3 | 7 | 8 layers, ports 7-14 |
| 8 | 2 layers, ports 7-8 | 8 | Reserved |

(continued)

| One codeword: codeword 0 is enabled, codeword 1 is disabled | | Two codewords: codeword 0 is enabled, codeword 1 is enabled | |
|---|---|---|---|
| Value | Message | Value | Message |
| 9 | 3 layers, ports 7-9 | 9 | Reserved |
| 10 | 4 layers, ports 7-10 | 10 | Reserved |
| 11 | Reserved | 11 | Reserved |
| 12 | Reserved | 12 | Reserved |
| 13 | Reserved | 13 | Reserved |
| 14 | Reserved | 14 | Reserved |
| 15 | Reserved | 15 | Reserved |

As shown in Table 2, the base station may transmit the ports, scrambling identity and the number of layers to the user equipment via dynamic signaling of 4 bits; in which, values of the nSCID may be 0, 1, 2, 3; hence, the UE is enabled to perform DM-RS-related channel estimation and demodulation, so as to support the high-dimension MU-MIMO.

As another example, in order to fully use existing dynamic signaling and lower signaling waste, a manner of combining high-layer signaling and dynamic signaling may be used. The signaling may include dynamic signaling and high-layer signaling; information indicated by the dynamic signaling may include a port, a number of layers and scrambling ID, and the design shown in Table 1 being able to be followed, and the information indicated by the high-layer signaling may include information on grouping scrambling sequences of the UE according to a position of the UE.

In particular, the high-layer signaling may indicate: grouping via ID of beam groups, the ID of beam groups is used to determine an initial value of a DM-RS pseudo sequence; or grouping via virtual cell ID, UE in different groups may be configured with different virtual cell ID. By grouping, UE relatively close to each other is grouped into the same group, and spatial separation between different groups is relatively better. Different implementation technologies may be used for particular grouping methods.

For example, the base station may configure beam groups for the UE according the position of the UE, each group being configured with different nscid_group, and nscid in a group being identical and being all 0, 1. Hence, a table of the dynamic signaling may reuse signaling in an existing standard (such as Table 1).

For the DM-RS sequence, its definition may be the same as in R10. What is different from an initial value of a pseudo-random sequence generator (i.e. a scrambled initial value) $c_{init} = \left( \lfloor n_s / 2 \rfloor + 1 \right) \bullet \left( 2 N_{cell}^{ID} + 1 \right) \bullet 2^{16} + n_{SCID}$ in the existing standard is that an initial value of a pseudo-random sequence generator of the embodiment of this disclosure may be determined by a formula as below:

$$c_{init} = \left( \lfloor n_s / 2 \rfloor + 1 \right) \cdot \left( 2 n_{ID}^{(n_{SCID})} + 1 \right) \cdot 2^{16} + n_{SCID} + 2 \cdot \left( n_{beam\_group\_ID} - 1 \right);$$

or

$$c_{init} = \left( \lfloor n_s / 2 \rfloor + 1 \right) \cdot \left( 2 n_{ID}^{(n_{SCID} + 2 \cdot (n_{beam\_group\_ID} - 1))} + 1 \right) \cdot 2^{16} + n_{SCID};$$

where, $c_{init}$ is the initial value of the DM-RS pseudo sequence, $n_{beam\_group\_ID}$ is the ID of the beam group, $n_{beam\_group\_ID}$ being greater than or equal to 1, and $n_{SCID}$ is the scrambling ID.

For another example, the base station may configure different virtual cell ID (virtual ID) for UE in different beam groups according the position of the UE.

In a case where MU-MIMO transmission is performed and a maximum number of streams supported by each piece of UE is less than or equal to 4, the information indicated by the dynamic signaling includes: the values of the scrambling ID are 0, 1, 2, 3 when one codeword is used, the number of layers is 1 and the port is 7; the values of the scrambling ID are 0, 1, 2, 3 when one codeword is used, the number of layers is 1 and the port is 8; the values of the scrambling ID are 0, 1 when one codeword is used, the number of layers is 2 and the ports are 7-8; the values of the scrambling ID are 0, 1, 2, 3, or the values of the scrambling ID are 0, 1, when two codewords are used, the number of layers is 2 and the ports are 7-8; the values of the scrambling ID are 0, 1 when two codewords are used, the number of layers is 3 and the ports are 7-9; and the values of the scrambling ID are 0, 1 when two codewords are used, the number of layers is 4 and the ports are 7-10.

Table 3 is an illustration table of related ports, scrambling sequences and the number of layers of the embodiment of this disclosure, which shows indication information on the antenna ports, scrambling identity and the number of layers in the embodiment of this disclosure; in which, a maximum rank of each piece of UE is 4.

Table 3

| One codeword: codeword 0 is enabled, codeword 1 is disabled | | Two codewords: codeword 0 is enabled, codeword 1 is enabled | |
|---|---|---|---|
| Value | Message | Value | Message |
| 0 | 1 layer, port 7, nSCID=0 | 0 | 2 layers, ports 7-8, nSCID=0 |
| 1 | 1 layer, port 7, nSCID=1 | 1 | 2 layers, ports 7-8, nSCID=1 |
| 2 | 1 layer, port 7, nSCID=2 | 2 | 2 layers, ports 7-8, nSCID=2 |
| 3 | 1 layer, port 7, nSCID=3 | 3 | 2 layers, ports 7-8, nSCID=3 |
| 4 | 1 layer, port 8, nSCID=0 | 4 | 3 layers, ports 7-9, nSCID=0 |
| 5 | 1 layer, port 8, nSCID=1 | 5 | 3 layers, ports 7-9, nSCID=1 |
| 6 | 1 layer, port 8, nSCID=2 | 6 | 4 layers, ports 7-10, nSCID=0 |
| 7 | 1 layer, port 8, nSCID=3 | 7 | 4 layers, ports 7-10, nSCID=1 |
| 8 | 2 layers, ports 7-8, nSCID=0 | 8 | 5 layers, ports 7-11 |
| 9 | 2 layers, ports 7-8, nSCID=1 | 9 | 6 layers, ports 7-12 |
| 10 | 3 layers, ports 7-9 | 10 | 7 layers, ports 7-13 |
| 11 | 4 layers, ports 7-10 | 11 | 8 layers, ports 7-14 |
| 12 | Reserved | 12 | Reserved |
| 13 | Reserved | 13 | Reserved |
| 14 | Reserved | 14 | Reserved |
| 15 | Reserved | 15 | Reserved |

Table 4 is another illustration table of related ports, scrambling sequences and the number of layers of the embodiment of this disclosure, which shows indication information on the antenna ports, scrambling identity and the number of layers in the embodiment of this disclosure; in which, a maximum rank of each piece of UE is 4.

Table 4

| One codeword: codeword 0 is enabled, codeword 1 is disabled | | Two codewords: codeword 0 is enabled, codeword 1 is enabled | |
|---|---|---|---|
| Value | Message | Value | Message |
| 0 | 1 layer, port 7, nSCID=0 | 0 | 2 layers, ports 7-8, nSCID=0 |
| 1 | 1 layer, port 7, nSCID=1 | 1 | 2 layers, ports 7-8, nSCID=1 |
| 2 | 1 layer, port 7, nSCID=2 | 2 | 3 layers, ports 7-9, nSCID=0 |
| 3 | 1 layer, port 7, nSCID=3 | 3 | 3 layers, ports 7-9, nSCID=1 |
| 4 | 1 layer, port 8, nSCID=0 | 4 | 4 layers, ports 7-10, nSCID=0 |

(continued)

| One codeword: codeword 0 is enabled, codeword 1 is disabled | | Two codewords: codeword 0 is enabled, codeword 1 is enabled | |
|---|---|---|---|
| Value | Message | Value | Message |
| 5 | 1 layer, port 8, nSCID=1 | 5 | 4 layers, ports 7-10, nSCID=1 |
| 6 | 1 layer, port 8, nSCID=2 | 6 | 5 layers, ports 7-11 |
| 7 | 1 layer, port 8, nSCID=3 | 7 | 6 layers, ports 7-12 |
| 8 | 2 layers, ports 7-8, nSCID=0 | 8 | 7 layers, ports 7-13 |
| 9 | 2 layers, ports 7-8, nSCID=1 | 9 | 8 layers, ports 7-14 |
| 10 | 3 layers, ports 7-9 | 10 | Reserved |
| 11 | 4 layers, ports 7-10 | 11 | Reserved |
| 12 | Reserved | 12 | Reserved |
| 13 | Reserved | 13 | Reserved |
| 14 | Reserved | 14 | Reserved |
| 15 | Reserved | 15 | Reserved |

It can be seen from the above embodiment that by transmitting signaling indicating DM-RS information by the base station to the UE, the orthogonal sequences used by the DM-RS being increased, the UE is enabled to support high-dimension MU-MIMO according to the signaling.

Embodiment 3

On the basis of Embodiment 1, an embodiment of this disclosure provides a method for indicating DM-RS information.

In Embodiment 2, DM-RSs of relatively more pieces of UE are multiplexed in the same resource, which will affect performance of edge UE. In this embodiment, transmission resources used by the DM-RS are increased, such as introducing more DM-RS ports (such as increasing from ports 7, 8 to ports 7, 8, 9, 10).

FIG. 7 is a schematic diagram of supporting high-dimension MU-MIMO by increasing orthogonal ports of an embodiment of this disclosure. As show in FIG. 7, ports 7, 8 and ports 9, 10 may all be used for the DM-RS.

As an example, the signaling is dynamic signaling, information indicated by the dynamic signaling may include a port, a number of layers and scrambling ID; in which, the number of used ports is increased.

In a case where MU-MIMO transmission is performed and a maximum number of streams supported by each piece of UE is less than or equal to 2, the information indicated by the dynamic signaling includes: the number of layers is 1, the port is 7 and the values of the scrambling ID are 0, 1, when one codeword is used; the number of layers is 1, the port is 8 and the values of the scrambling ID are 0, 1, when one codeword is used; the number of layers is 1, the port is 9 and the values of the scrambling ID are 0, 1, when one codeword is used; the number of layers is 1, the port is 10 and the values of the scrambling ID are 0, 1, when one codeword is used; the number of layers is 2, the ports are 7-8 and the values of the scrambling ID are 0, 1, when two codewords are used; the number of layers is 2, the ports are 9-10 and the values of the scrambling ID are 0, 1, when two codewords are used.

Table 5 is a further illustration table of related ports, scrambling sequences and the number of layers of the embodiment of this disclosure, which shows indication information on the antenna ports, scrambling identity and the number of layers in the embodiment of this disclosure; in which, a maximum rank of each piece of UE is 2.

Table 5

| One codeword: codeword 0 is enabled, codeword 1 is disabled | | Two codewords: codeword 0 is enabled, codeword 1 is enabled | |
|---|---|---|---|
| Value | Message | Value | Message |
| 0 | 1 layer, port 7, nSCID=0 | 0 | 2 layers, ports 7-8, nSCID=0 |

(continued)

| One codeword: codeword 0 is enabled, codeword 1 is disabled | | Two codewords: codeword 0 is enabled, codeword 1 is enabled | |
|---|---|---|---|
| Value | Message | Value | Message |
| 1 | 1 layer, port 7, nSCID=1 | 1 | 2 layers, ports 7-8, nSCID=1 |
| 2 | 1 layer, port 8, nSCID=0 | 2 | 2 layers, ports 9-10, nSCID=0 |
| 3 | 1 layer, port 8, nSCID=1 | 3 | 2 layers, ports 9-10, nSCID=1 |
| 4 | 1 layer, port 9, nSCID=0 | 4 | 3 layers, ports 7-9 |
| 5 | 1 layer, port 9, nSCID=1 | 5 | 4 layers, ports 7-10 |
| 6 | 1 layer, port 10, nSCID=0 | 6 | 5 layers, ports 7-11 |
| 7 | 1 layer, port 10, nSCID=1 | 7 | 6 layers, ports 7-12 |
| 8 | 2 layers, ports 7-8 | 8 | 7 layers, ports 7-13 |
| 9 | 3 layers, ports 7-9 | 9 | 8 layers, ports 7-14 |
| 10 | 4 layers, ports 7-10 | 10 | Reserved |
| 11 | Reserved | 11 | Reserved |
| 12 | Reserved | 12 | Reserved |
| 13 | Reserved | 13 | Reserved |
| 14 | Reserved | 14 | Reserved |
| 15 | Reserved | 15 | Reserved |

As another example, the signaling may include dynamic signaling and high-layer signaling; information indicated by the dynamic signaling may include a port, the number of layers, and information indicated by the high-layer signaling may include scrambling ID.

Table 6 is a further illustration table of related ports and the number of layers of the embodiment of this disclosure, which shows indication information on the antenna ports and the number of layers in the embodiment of this disclosure; in which, a maximum rank of each piece of UE is 4.

Table 6

| One codeword: codeword 0 is enabled, codeword 1 is disabled | | Two codewords: codeword 0 is enabled, codeword 1 is enabled | |
|---|---|---|---|
| Value | Message | Value | Message |
| 0 | 1 layer, port 7 | 0 | 2 layers, ports 7-8 |
| 1 | 1 layer, port 8 | 1 | 3 layers, ports 7-9 |
| 2 | 1 layer, port 9 | 2 | 4 layers, ports 7-10 |
| 3 | 1 layer, port 10 | 3 | 5 layers, ports 7-11 |
| 4 | 2 layers, ports 7-8 | 4 | 6 layers, ports 7-12 |
| 5 | 3 layers, ports 7-9 | 5 | 7 layers, ports 7-13 |
| 6 | 4 layers, ports 7-10 | 6 | 8 layers, ports 7-14 |
| 7 | Reserved | 7 | Reserved |

The information shown in Table 6 may be indicated by using the dynamic signaling, and the scrambling ID may be indicated by using the high-layer signaling. Taking the actual number of pieces of UE of the MU-MIMO into account, each piece of UE may select from four pieces of scrambling ID, for example, n_SCID = 0,1,2,3. Hence, on the one hand, the UE may have relatively more pieces of ID, that is, sequences, for selection, and a defect that semi-static ID cannot flexibly change may be overcome; and on the other hand, the ID is controlled with a certain range, which lowers complexity of blind interference cancelling by UE with high capability.

Table 7 is still another illustration table of related ports, scrambling sequences and the number of layers of the embodiment of this disclosure, which shows indication information on the antenna ports, scrambling identity and the number of layers in the embodiment of this disclosure; in which, a maximum rank of each piece of UE is 4.

Table 7

| One codeword: codeword 0 is enabled, codeword 1 is disabled | | Two codewords: codeword 0 is enabled, codeword 1 is enabled | |
|---|---|---|---|
| Value | Message | Value | Message |
| 0 | 1 layer, port 7, nSCID=0 | 0 | 2 layers, ports 7-8, nSCID=0 |
| 1 | 1 layer, port 7, nSCID=1 | 1 | 2 layers, ports 7-8, nSCID=1 |
| 2 | 1 layer, port 8, nSCID=0 | 2 | 2 layers, ports 9-10, nSCID=0 |
| 3 | 1 layer, port 8, nSCID=1 | 3 | 2 layers, ports 9-10, nSCID=1 |
| 4 | 1 layer, port 9, nSCID=0 | 4 | 2 layers, ports 8-9, nSCID=0 |
| 5 | 1 layer, port 9, nSCID=1 | 5 | 2 layers, ports 8-9, nSCID=1 |
| 6 | 1 layer, port 10, nSCID=0 | 6 | 3 layers, ports 7-9, nSCID=0 |
| 7 | 1 layer, port 10, nSCID=1 | 7 | 3 layers, ports 7-9, nSCID=1 |
| 8 | 2 layers, ports 7-8, nSCID=0 | 8 | 4 layers, ports 7-10, nSCID=0 |
| 9 | 2 layers, ports 7-8, nSCID=1 | 9 | 4 layers, ports 7-10, nSCID=1 |
| 10 | 2 layers, ports 9-10, nSCID=0 | 10 | 5 layers, ports 7-11 |
| 11 | 2 layers, ports 9-10, nSCID=1 | 11 | 6 layers, ports 7-12 |
| 12 | 3 layers, ports 7-9 | 12 | 7 layers, ports 7-13 |
| 13 | 4 layers, ports 7-10 | 13 | 8 layers, ports 7-14 |
| 14 | Reserved | 14 | Reserved |
| 15 | Reserved | 15 | Reserved |

Table 8 is still another illustration table of related ports, scrambling sequences and the number of layers of the embodiment of this disclosure, which shows indication information on the antenna ports, scrambling identity and the number of layers in the embodiment of this disclosure; in which, a maximum rank of each piece of UE is 4.

Table 8

| One codeword: codeword 0 is enabled, codeword 1 is disabled | | Two codewords: codeword 0 is enabled, codeword 1 is enabled | |
|---|---|---|---|
| Value | Message | Value | Message |
| 0 | 1 layer, port 7, nSCID=0 | 0 | 2 layers, ports 7-8, nSCID=0 |
| 1 | 1 layer, port 7, nSCID=1 | 1 | 2 layers, ports 7-8, nSCID=1 |
| 2 | 1 layer, port 8, nSCID=0 | 2 | 2 layers, ports 9-10, nSCID=0 |
| 3 | 1 layer, port 8, nSCID=1 | 3 | 2 layers, ports 9-10, nSCID=1 |
| 4 | 1 layer, port 9, nSCID=0 | 4 | 3 layers, ports 7-9, nSCID=0 |
| 5 | 1 layer, port 9, nSCID=1 | 5 | 3 layers, ports 7-9, nSCID=1 |
| 6 | 1 layer, port 10, nSCID=0 | 6 | 4 layers, ports 7-10, nSCID=0 |
| 7 | 1 layer, port 10, nSCID=1 | 7 | 4 layers, ports 7-10, nSCID=1 |

(continued)

| One codeword: codeword 0 is enabled, codeword 1 is disabled | | Two codewords: codeword 0 is enabled, codeword 1 is enabled | |
|---|---|---|---|
| Value | Message | Value | Message |
| 8 | 2 layers, ports 7-8, nSCID=0 | 8 | 5 layers, ports 7-11 |
| 9 | 2 layers, ports 7-8, nSCID=1 | 9 | 6 layers, ports 7-12 |
| 10 | 2 layers, ports 9-10, nSCID=0 | 10 | 7 layers, ports 7-13 |
| 11 | 2 layers, ports 9-10, nSCID=1 | 11 | 8 layers, ports 7-14 |
| 12 | 3 layers, ports 7-9 | 12 | Reserved |
| 13 | 4 layers, ports 7-10 | 13 | Reserved |
| 14 | Reserved | 14 | Reserved |
| 15 | Reserved | 15 | Reserved |

In comparison with Table 7, ports 9-10 are added at two layers in Table 8, hence, it may be ensured that DM-RSs of two pieces of UE of rank = 2 may use orthogonal ports. In which, values 8, 9, 10, 11, 12 and 13 are used for retransmission.

Table 9 is still another illustration table of related ports, scrambling sequences and the number of layers of the embodiment of this disclosure, which shows indication information on the antenna ports, scrambling identity and the number of layers in the embodiment of this disclosure; in which, a maximum rank of each piece of UE is 4.

Table 9

| One codeword: codeword 0 is enabled, codeword 1 is disabled | | Two codewords: codeword 0 is enabled, codeword 1 is enabled | |
|---|---|---|---|
| Value | Message | Value | Message |
| 0 | 1 layer, port 7, nSCID=0 | 0 | 2 layers, ports 7-8, nSCID=0 |
| 1 | 1 layer, port 7, nSCID=1 | 1 | 2 layers, ports 7-8, nSCID=1 |
| 2 | 1 layer, port 8, nSCID=0 | 2 | 2 layers, ports 9-10, nSCID=0 |
| 3 | 1 layer, port 8, nSCID=1 | 3 | 2 layers, ports 9-10, nSCID=1 |
| 4 | 1 layer, port 9, nSCID=0 | 4 | 3 layers, ports 7-9, nSCID=0 |
| 5 | 1 layer, port 9, nSCID=1 | 5 | 3 layers, ports 7-9, nSCID=1 |
| 6 | 1 layer, port 10, nSCID=0 | 6 | 4 layers, ports 7-10, nSCID=0 |
| 7 | 1 layer, port 10, nSCID=1 | 7 | 4 layers, ports 7-10, nSCID=1 |
| 8 | 2 layers, ports 8-9, nSCID=0 | 8 | 5 layers, ports 7-11 |
| 9 | 2 layers, ports 8-9, nSCID=1 | 9 | 6 layers, ports 7-12 |
| 10 | 2 layers, ports 7-8, nSCID=0 | 10 | 7 layers, ports 7-13 |
| 11 | 2 layers, ports 7-8, nSCID=1 | 11 | 8 layers, ports 7-14 |
| 12 | 2 layers, ports 9-10, nSCID=0 | 12 | Reserved |

(continued)

| One codeword: codeword 0 is enabled, codeword 1 is disabled | | Two codewords: codeword 0 is enabled, codeword 1 is enabled | |
|---|---|---|---|
| Value | Message | Value | Message |
| 13 | 2 layers, ports 9-10, nSCID=1 | 13 | Reserved |
| 14 | 3 layers, ports 7-9 | 14 | Reserved |
| 15 | 4 layers, ports 7-10 | 15 | Reserved |

Table 10 is still another illustration table of related ports, scrambling sequences and the number of layers of the embodiment of this disclosure, which shows indication information on the antenna ports, scrambling identity and the number of layers in the embodiment of this disclosure; in which, a maximum rank of each piece of UE is 4.

Table 10

| One codeword: codeword 0 is enabled, codeword 1 is disabled | | Two codewords: codeword 0 is enabled, codeword 1 is enabled | |
|---|---|---|---|
| Value | Message | Value | Message |
| 0 | 1 layer, port 7, nSCID=0 | 0 | 2 layers, ports 7-8, nSCID=0 |
| 1 | 1 layer, port 7, nSCID=1 | 1 | 2 layers, ports 7-8, nSCID=1 |
| 2 | 1 layer, port 8, nSCID=0 | 2 | 2 layers, ports 9-10, nSCID=0 |
| 3 | 1 layer, port 8, nSCID=1 | 3 | 2 layers, ports 9-10, nSCID=1 |
| 4 | 1 layer, port 9, nSCID=0 | 4 | 3 layers, ports 7-9, nSCID=0 |
| 5 | 1 layer, port 9, nSCID=1 | 5 | 3 layers, ports 7-9, nSCID=1 |
| 6 | 1 layer, port 10, nSCID=0 | 6 | 4 layers, ports 7-10, nSCID=0 |
| 7 | 1 layer, port 10, nSCID=1 | 7 | 4 layers, ports 7-10, nSCID=1 |
| 8 | 2 layers, ports 7,9, nSCID=0 | 8 | 5 layers, ports 7-11 |
| 9 | 2 layers, ports 7,9, nSCID=1 | 9 | 6 layers, ports 7-12 |
| 10 | 2 layers, ports 7-8, nSCID=0 | 10 | 7 layers, ports 7-13 |
| 11 | 2 layers, ports 7-8, nSCID=1 | 11 | 8 layers, ports 7-14 |
| 12 | 2 layers, ports 9-10, nSCID=0 | 12 | Reserved |
| 13 | 2 layers, ports 9-10, nSCID=1 | 13 | Reserved |
| 14 | 3 layers, ports 7-9 | 14 | Reserved |
| 15 | 4 layers, ports 7-10 | 15 | Reserved |

When the DM-RSs use ports 7, 8, loads are concentrated on the 12 REs, and when the DM-RSs use ports 8, 9, loads are distributed on the 24 REs. Taking increasing flexibility in retransmission into account, ports 8, 9 may also perform retransmission (such as shown Table 9). Hence, evenness of distribution of the DM-RSs may be increased. And on the other hand, this may keep in consistence with an SU-MIMO mapping method, and ensure transparent MU-MIMO transmission.

In transmission of SU-MIMO rank = 3, three streams correspond to ports 7, 8, 9, respectively, and if it is kept consistent in corresponding to MU-MIMO, transparency of SU and MU may be ensured. For example, corresponding to that one piece of UE uses port 7, and another piece of UE uses ports 8, 9 (as shown Table 9); or, one piece of UE uses ports 7, 9, and another piece of UE uses port 8 (as shown Table 10).

It can be seen from the above embodiment that by transmitting signaling indicating DM-RS information by the base station to the UE, the orthogonal sequences used by the DM-RS being increased, the UE is enabled to support high-dimension MU-MIMO according to the signaling.

Embodiment 4

On the basis of embodiments 2 and 3, an embodiment of this disclosure provides a method for indicating DM-RS information.

In this embodiment, Embodiment 2 and Embodiment 3 may be used jointly. In which, dynamic signaling may use the forms described in Embodiment 3, such as those shown in tables 5 and 7-10, and may also use the forms described in Embodiment 2, such as those shown in tables 2-4. High-layer signaling may use the form described in Embodiment 2, such as grouping according to the position of the UE. Furthermore, the manner combining the high-layer signaling and the dynamic signaling shown in Table 6 may be used.

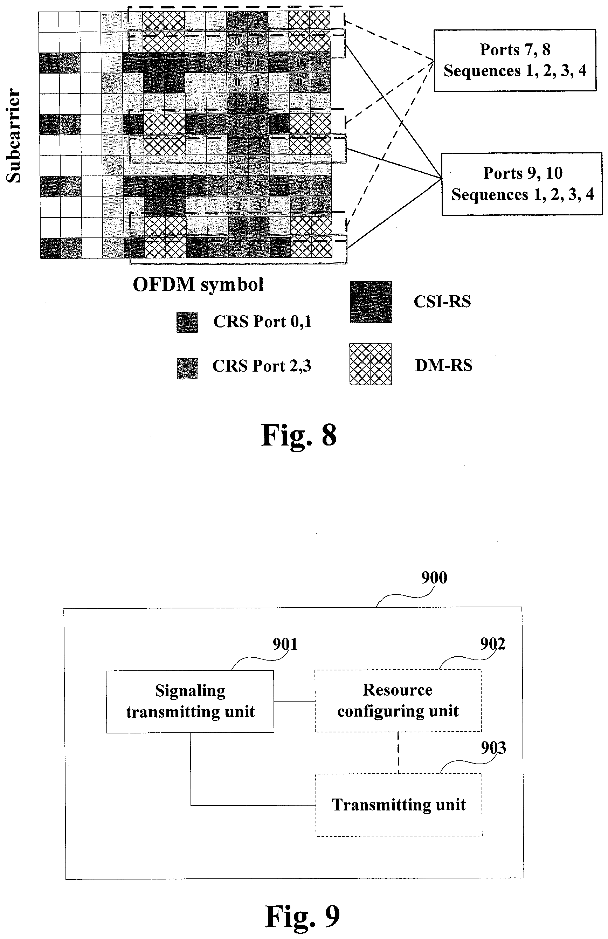

FIG. 8 is a schematic diagram of supporting high-dimension MU-MIMO by increasing orthogonal ports and increasing orthogonal sequences of an embodiment of this disclosure. As shown in FIG. 8, ports 7, 8 and ports 9, 10 may all be used for DM-RSs, ports 7, 8 may correspond to, for example, four orthogonal sequences (1, 2, 3, 4), and ports 9, 10 may correspond to, for example, four orthogonal sequences (1, 2, 3, 4).

It can be seen from the above embodiment that by transmitting signaling indicating DM-RS information by the base station to the UE, the UE is enabled to support high-dimension MU-MIMO according to the signaling.

Embodiment 5

On the basis of Embodiment 1, an embodiment of this disclosure provides a method for indicating DM-RS information.

In this embodiment, the base station transmits DM-RS information of another piece of UE performing MU-MIMO with the UE to the UE, so that the UE performs interference cancelling according to the DM-RS information of the other piece of UE.

For example, the DM-RS information of the other piece of UE may include: virtual cell ID of the other piece of UE, or information on a beam group of the other piece of UE, or nSCID information on UE possibly pairing with the UE and performing MU-MIMO, and information on a ratio of DM-RS power of UE possibly pairing with the UE and performing MU-MIMO to DM-RS power of the UE, or possible information on the ratio thereof, if the DM-RS power of UE is different; however, this disclosure is not limited thereto.

In this embodiment, when sequences of multiple pieces of UE are multiplexed together in a code division multiplexing manner, channel estimation performance of the DM-RSs may be improved by interference cancelling. In order to cancel interference, the UE expects to know DM-RS sequences of other UE possibly occurring at positions corresponding to the DM-RSs.

As an example, virtual cell ID of all possible UE needs to be notified to the UE via the high-layer signaling.

As another example, if the DM-RS sequences of the UE are limited to some beam sets, the UE only performs interference cancelling on the sequences in corresponding beam sets. Hence, the base station may transmit the DM-RS information of the other piece of UE performing MU-MIMO with the UE to the UE, so that the UE performs interference cancelling in the beam sets.

It can be seen from the above embodiment that by transmitting signaling indicating DM-RS information by the base station to the UE, the UE is enabled to support high-dimension MU-MIMO according to the signaling.

Embodiment 6

On the basis of Embodiment 1, an embodiment of this disclosure provides a method indicating for DM-RS information.

In this embodiment, the base station transmits information indicating resources used by the DM-RSs to the UE, so that the UE receives data according to the resources used by the DM-RSs. In which, the resources used by the DM-RSs may be 12 REs or 24 REs.

In this embodiment, when the UE performs MU-MIMO transmission, it only knows positions of the DM-RS resources of itself, and does not know positions of DM-RSs of other UE. In order to reduce interference on the DM-RSs of other UE, reasonable resource mapping needs to be performed.

The base station may perform transmission by rate matching or punching. When the UE does not know positions of DM-RSs of other UE, if UE 1 needs to transmit data at DM-RS positions of UE 2, it may be processed by punching; of course, this will have an effect on demodulation performance of UE 1. Furthermore, the base station may notify the UE of positions of all DM-RSs. And the base station performs rate matching in performing physical downlink shared channel (PDSCH) transmission to the UE.

For example, such signaling indication is needed in the following two scenarios:

(1) UE 1, UE 2, UE 3 and UE 4 transmit DM-RSs by using ports 7, 8, 9, 10, respectively; UE 1 and UE 2 do not know existence of UE 3 and UE 4, and UE 1 and UE 2 transmit PDSCHs at positions to which the DM-RSs of UE 3 and UE 4 correspond; this will bring serious interference to the DM-RSs of UE 3 and UE 4, and affect performance of the system; and

(2) UE 1 and UE 2 perform MU-MIMO transmission by respectively using ranks 3, 1, UE 2 does not know existence of UE 1 and transmits data at positions of the DM-RSs to which port 9 of UE 1 corresponds; this will bring serious interference to port 9 of UE 1, and affect performance of UE 1.

It should be appreciated that this disclosure is not limited to the above scenarios, and any scenario where time-frequency positions or resource positions of DM-RSs of any two pieces of UE are different needs such indication signaling.

Therefore, the base station may add information of 1 bit to indicate resources used by the DM-RSs, such as 12 or 24 REs. And the base station transmits the DM-RSs at corresponding positions, and does not perform PDSCH data transmission, thereby avoiding or lowering interference brought about by the high-dimension MU-MIMO.

It can be seen from the above embodiment that by transmitting signaling indicating DM-RS information by the base station to the UE, in which information on the resources used by the DM-RSs is transmitted to the UE, the UE is enabled to support high-dimension MU-MIMO according to the signaling.

Embodiment 7

An embodiment of this disclosure provides an apparatus for indicating DM-RS information, applicable to a 3D MIMO system. The embodiment of this disclosure corresponds to the method for indicating DM-RS information described in embodiments 1-6, with identical contents being not going to be described herein any further.

FIG. 9 is a schematic diagram of an apparatus for indicating DM-RS information of the embodiment of this disclosure. The apparatus 900 for indicating DM-RS information may be configured in a base station, and may include a signaling transmitting unit 901 configured to transmit signaling indicating DM-RS information to UE, so that the UE supports high-dimension MU-MIMO according to the signaling.

In an implementation, the signaling indicates that orthogonal sequences used by the DM-RS in performing MU-MIMO are increased.

The signaling includes dynamic signaling, information indicated by the dynamic signaling including a port, a number of layers and scrambling ID, the number of values of the scrambling ID being greater than 2. Or, the signaling includes dynamic signaling and high-layer signaling, information indicated by the dynamic signaling including a port, a number of layers and scrambling ID, and the information indicated by the high-layer signaling including information on grouping according to a position of the UE.

In an implementation, the signaling indicates that the transmission resources used by the DM-RS in performing MU-MIMO are increased.

The signaling includes dynamic signaling, information indicated by the dynamic signaling including a port, a number of layers and scrambling ID; the number of the used ports is increased. Or, the signaling includes dynamic signaling and high-layer signaling, information indicated by the dynamic signaling including a port and a number of layers, and the information indicated by the high-layer signaling including scrambling ID.

In another implementation, the base station transmits DM-RS information of another piece of UE performing MU-MIMO with the UE to the UE, so that the UE performs interference cancelling according to the DM-RS information of the other piece of UE.

In a further implementation, the base station transmits information indicating resources used by the DM-RS to the UE. The resources used by the DM-RS are 12 REs or 24 REs.

As shown in FIG. 9, the apparatus 900 for indicating DM-RS information may further include:

a resource configuring unit 902 configured to configure DM-RS resources for the UE performing MU-MIMO; and
a transmitting unit 903 configured to generate DM-RSs in the configured resources and transmit the DM-RSs.

The DM-RS may be transmitted by using relatively more orthogonal sequences, for example, values of nSCID are changed from 0, 1 into 0, 1, 2, 3; the DM-RS with orthogonal sequences being increased may be transmitted in a code division multiplexing (CDM) manner; furthermore, the DM-RS may be transmitted by using relatively more orthogonal ports, for example, ports used by the DM-RS are increased from 7, 8 to 7, 8, 9, 10; thus, the transmission resources used by the DM-RS may be increased.

This embodiment further provides a base station, configured with the apparatus 900 for indicating DM-RS information as described above.

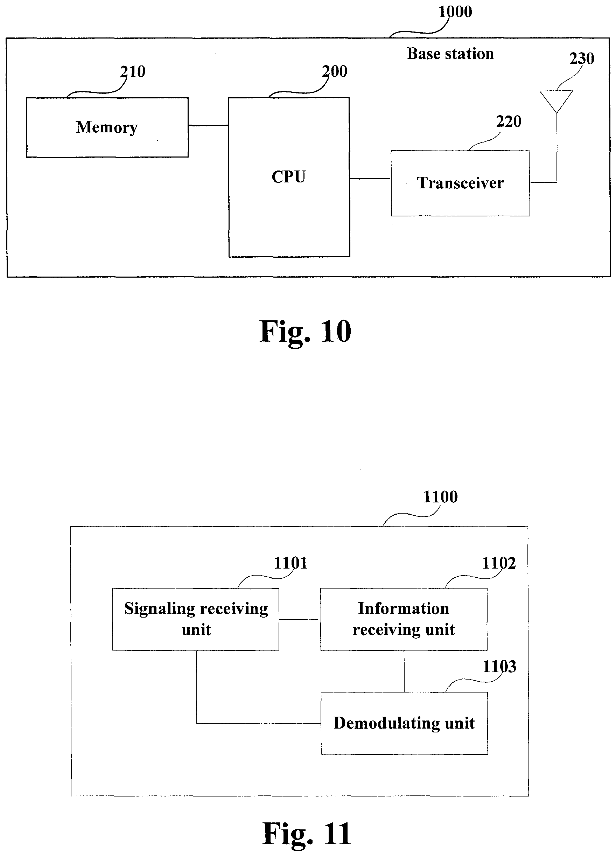

FIG. 10 is a schematic diagram of a structure of the base station of the embodiment of this disclosure. As shown in FIG. 10, the base station 1000 may include a central processing unit (CPU) 200 and a memory 210, the memory 210 being coupled to the central processing unit 200. The memory 210 may store various data, and furthermore, it may store a program for information processing, and execute the program under control of the central processing unit 200, so as to receive various information transmitted by the UE, and transmit request information to the UE.

The central processing unit 200 may be configured to carry out the functions of the apparatus 900 for indicating DM-RS information. And the base station 1000 may carry out the method for indicating DM-RS information described in embodiments 1-6.

Furthermore, as shown in FIG. 10, the base station 1000 may include a transceiver 220, and an antenna 230, etc. Functions of the above components are similar to those in the prior art, and shall not be described herein any further. It should be appreciated that the base station 1000 does not necessarily include all the parts shown in FIG. 10, and furthermore, the base station 1000 may include parts not shown in FIG. 10, and the relevant art may be referred to.

Furthermore, the UE may estimate channels by using the DM-RS according to signaling, so as to support data demodulation of high-dimension MU-MIMO.

FIG. 11 is another schematic diagram of the apparatus for indicating DM-RS information of an embodiment of this disclosure. The apparatus 1100 for indicating DM-RS information may be configured in UE, and may include a signaling receiving unit 1101, an information receiving unit 1102 and a demodulating unit 1103.

The signaling receiving unit 1101 is configured to receive signaling indicating DM-RS information transmitted by the base station. Embodiments 1-6 may be referred to for details of the signaling. The information receiving unit 1102 is configured to receive a DM-RS transmitted by the base station. And the demodulating unit 1103 is configured to estimate channels by using the DM-RS according to the signaling, so as to support data demodulation of high-dimension MU-MIMO.

The embodiment of this disclosure further provides UE, configured with the apparatus 1100 for indicating DM-RS information as described above.

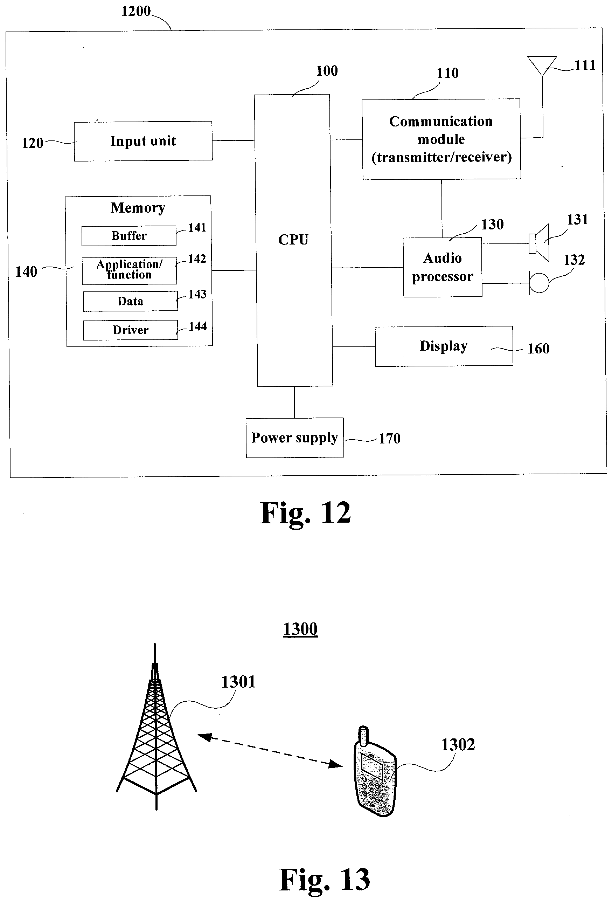

FIG. 12 is a schematic diagram of a systematic structure of the UE of the embodiment of this disclosure. As shown in FIG. 12, the UE 1200 may include a central processing unit 100 and a memory 140, the memory 140 being coupled to the central processing unit 100. It should be appreciated that this figure is illustrative only, and other types of structures may also be used, so as to supplement or replace this structure and achieve a telecommunications function or other functions.

In an implementation, the functions of the apparatus 1100 for indicating DM-RS information may be integrated into the central processing unit 100. The central processing unit 100 may be configured to carry out the method corresponding to the UE side described in embodiments 1-6.

In another implementation, the apparatus 1100 for indicating DM-RS information and the central processing unit 100 may be configured separately. For example, the apparatus 1100 for indicating DM-RS information may be configured as a chip connected to the central processing unit 100, with its functions being realized under control of the central processing unit 100.

As shown in FIG. 12, the UE 1200 may further include a communication module 110, an input unit 120, an audio processor 130, a display 160 and a power supply 170. It should be appreciated that the UE 1200 does not necessarily include all the parts shown in FIG. 12, and furthermore, the UE 1200 may include parts not shown in FIG. 12, and the relevant art may be referred to.

As shown in FIG. 12, the central processing unit 100 is sometimes referred to as a controller or control, and may include a microprocessor or other processor devices and/or logic devices. The central processing unit 100 receives input and controls operations of every components of the UE 1200.

The memory 140 may be, for example, one or more of a buffer memory, a flash memory, a hard drive, a mobile medium, a volatile memory, a nonvolatile memory, or other suitable devices, which may store the above planned network information and deployed network information, and may further store a program executing related information. And the central processing unit 100 may execute the program stored in the memory 140, so as to realize information storage or processing, etc. Functions of other parts are similar to those of the prior art, which shall not be described herein any further. The parts of the UE 1200 may be realized by specific hardware, firmware, software, or any combination thereof, without departing from the scope of the present disclosure.

It can be seen from the above embodiment that by transmitting signaling indicating DM-RS information by the base station to the UE, the UE is enabled to support high-dimension MU-MIMO according to the signaling.

Embodiment 8

An embodiment of this disclosure provides a communication system. FIG. 13 is a schematic diagram of a structure of the communication system of the embodiment of this disclosure. As shown in FIG. 13, the communication system 1300 includes a base station 1301 and UE 1302. The base station 1301 is configured with the apparatus 900 for indicating DM-RS information described in Embodiment 7, and the UE 1302 is configured with the apparatus 1100 for indicating DM-RS information described in Embodiment 7.

An embodiment of the present disclosure provides a computer readable program code, which, when executed in a base station, will cause a computer unit to carry out the method for indicating DM-RS information described in embodiments 1-6 in the base station.

An embodiment of the present disclosure provides a computer readable medium, including a computer readable program code, which will cause a computer unit to carry out the method for indicating DM-RS information described in embodiments 1-6 in a base station.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

## Claims

1. A method for indicating demodulation reference signal (DM-RS) information, applicable to a three-dimensional (3D) multiple input multiple output (MIMO) system, the method comprising:

   transmitting, by a base station, signaling indicating DM-RS information to user equipment (UE), so that the UE supports high-dimension multiple-user MIMO (MU-MIMO) according to the signaling.

2. The method according to claim 1, wherein the signaling indicates that orthogonal sequences used by the DM-RS in performing the MU-MIMO are increased.

3. The method according to claim 2, wherein the signaling comprises dynamic signaling; information indicated by the dynamic signaling comprising a port, a number of layers and scrambling identifier (ID), the number of values of the scrambling ID being greater than 2.

4. The method according to claim 3, wherein in a case where MU-MIMO transmission is performed and a maximum number of streams supported by each piece of UE is less than or equal to 2, the information indicated by the dynamic signaling comprises:

   the values of the scrambling ID are 0, 1, 2, 3 when one codeword is used, the number of layers is 1 and the port is 7; and
   the values of the scrambling ID are 0, 1, 2, 3 when one codeword is used, the number of layers is 1 and the port is 8.

5. The method according to claim 2, wherein the signaling comprises dynamic signaling and high-layer signaling; information indicated by the dynamic signaling comprising a port, the number of layers and scrambling ID; and information indicated by the high-layer signaling comprising information on grouping scrambling sequences of the UE according to a position of the UE.

6. The method according to claim 5, wherein the high-layer signaling indicates grouping by ID of a beam group, wherein the ID of the beam group is used to determine an initial value of a DM-RS pseudorandom sequence; or indicates grouping by virtual cell ID, wherein UE of different groups is configured with different virtual cell ID.

7. The method according to claim 6, wherein the initial value of the DM-RS pseudorandom sequence is determined by a formula as below:

$$c_{\text{init}} = \left( \left\lfloor n_s / 2 \right\rfloor + 1 \right) \cdot \left( 2n_{\text{ID}}^{(n_{\text{SCID}})} + 1 \right) \cdot 2^{16} + n_{\text{SCID}} + 2 \cdot \left( n_{beam\_group\_ID} - 1 \right) ;$$

or,

$$c_{\text{init}} = \left( \left\lfloor n_s / 2 \right\rfloor + 1 \right) \cdot \left( 2n_{\text{ID}}^{(n_{\text{SCID}} + 2 \cdot (n_{beam\_group\_ID} - 1))} + 1 \right) \cdot 2^{16} + n_{\text{SCID}} ;$$

where, $c_{\text{init}}$ is the initial value of the DM-RS pseudorandom sequence, $n_{beam\_group\_ID}$ is the ID of the beam group and is greater than 1, and $n_{\text{SCID}}$ is the scrambling ID.

8. The method according to claim 3, wherein in a case where MU-MIMO transmission is performed and a maximum number of streams supported by each piece of UE is less than or equal to 4,
the information indicated by the dynamic signaling comprises:

the values of the scrambling ID are 0, 1, 2, 3 when one codeword is used, the number of layers is 1 and the port is 7;
the values of the scrambling ID are 0, 1, 2, 3 when one codeword is used, the number of layers is 1 and the port is 8;
the values of the scrambling ID are 0, 1 when one codeword is used, the number of layers is 2 and the ports are 7-8;
the values of the scrambling ID are 0, 1, 2, 3, or the values of the scrambling ID are 0, 1, when two codewords are used, the number of layers is 2 and the ports are 7-8;
the values of the scrambling ID are 0, 1 when two codewords are used, the number of layers is 3 and the ports are 7-9; and
the values of the scrambling ID are 0, 1 when two codewords are used, the number of layers is 4 and the ports are 7-10.

9. The method according to claim 1, wherein the signaling indicates that transmission resources used by the DM-RS in performing the MU-MIMO are increased.

10. The method according to claim 9, wherein the signaling comprises dynamic signaling; information indicated by the dynamic signaling including a port, a number of layers and scrambling ID; wherein, the number of used ports is increased.

11. The method according to claim 10, wherein in a case where MU-MIMO transmission is performed and a maximum number of streams supported by each piece of UE is less than or equal to 2,
the information indicated by the dynamic signaling comprises:

the number of layers is 1, the port is 7 and the values of the scrambling ID are 0, 1, when one codeword is used;
the number of layers is 1, the port is 8 and the values of the scrambling ID are 0, 1, when one codeword is used;
the number of layers is 1, the port is 9 and the values of the scrambling ID are 0, 1, when one codeword is used;
the number of layers is 1, the port is 10 and the values of the scrambling ID are 0, 1, when one codeword is used;
the number of layers is 2, the ports are 7-8 and the values of the scrambling ID are 0, 1, when two codewords are used;
the number of layers is 2, the ports are 9-10 and the values of the scrambling ID are 0, 1, when two codewords are used.

12. The method according to claim 10, wherein in a case where MU-MIMO transmission is performed and a maximum number of streams supported by each piece of UE is less than or equal to 4,
the information indicated by the dynamic signaling comprises:

the number of layers is 1, the port is 7 and the values of the scrambling ID are 0, 1, when one codeword is used;

the number of layers is 1, the port is 8 and the values of the scrambling ID are 0, 1, when one codeword is used;

the number of layers is 1, the port is 9 and the values of the scrambling ID are 0, 1, when one codeword is used;

the number of layers is 1, the port is 10 and the values of the scrambling ID are 0, 1, when one codeword is used;

the number of layers is 2, the ports are 7-8 and the values of the scrambling ID are 0, 1, when one codeword is used;

the number of layers is 2, the ports are 9-10 and the values of the scrambling ID are 0, 1, when one codeword is used;

the number of layers is 2, the ports are 7-8 and the values of the scrambling ID are 0, 1, when two codewords are used;

the number of layers is 2, the ports are 9-10 and the values of the scrambling ID are 0, 1, when two codewords are used;

the number of layers is 3, the ports are 7-9 and the values of the scrambling ID are 0, 1, when two codewords are used; and

the number of layers is 4, the ports are 7-10 and the values of the scrambling ID are 0, 1, when two codewords are used.

13. The method according to claim 12, wherein the information indicated by the dynamic signaling further includes:

the number of layers is 2, the ports are 8-9 and the values of the scrambling ID are 0, 1, when two codewords are used;

or,

the number of layers is 2, the ports are 8-9 and the values of the scrambling ID are 0, 1, when one codeword is used;

or,

the number of layers is 2, the ports are 7, 9 and the values of the scrambling ID are 0, 1, when one codeword is used.

14. The method according to claim 9, wherein the signaling comprises dynamic signaling and high-layer signaling; information indicated by the dynamic signaling comprising a port and a number of layers; and information indicated by the high-layer signaling comprising scrambling ID.

15. The method according to claim 1, wherein the method further comprises:

transmitting, by the base station to the UE, DM-RS information of another piece of UE possibly performing MU-MIMO with the UE, so that the UE performs interference cancelling according to the DM-RS information of the other piece of UE.

16. The method according to claim 15, wherein the DM-RS information of the other piece of UE includes any piece of the following information or a combination thereof:

virtual ID of the other piece of UE,

information on a beam group of the other piece of UE,

scrambling ID of UE possibly pairing with the UE, and

information on a ratio of DM-RS power of UE possibly pairing with the UE to DM-RS power of the UE, or possible information on the ratio thereof, if the DM-RS power of UE is different.

17. The method according to claim 1, wherein the method further comprises:

transmitting, by the base station to the UE, information indicating a resource used by the DM-RS.

18. The method according to claim 17, wherein the resources used by the DM-RS are 12 REs or 24 REs.

19. An apparatus for indicating DM-RS information, applicable to a 3D MIMO system, the apparatus comprising:

a signaling transmitting unit configured to transmit signaling indicating DM-RS information to UE, so that the UE supports high-dimension MU-MIMO according to the signaling.

20. A communication system, comprising:

a base station configured to transmit signaling indicating DM-RS information to UE, so that the UE supports high-dimension MU-MIMO according to the signaling.

Fig. 1

Subcarrier

OFDM symbol

ports 7, 8, 11, 13

Ports 9, 10, 12, 14

CRS Port 0,1

CRS Port 2,3

CSI-RS

DM-RS

Fig. 2

Fig. 3

Step 401, Transmitting, by a base station, signaling indicating DM-RS information to UE, so that the UE supports high-dimension MU-MIMO according to the signaling

Fig. 4

Base
station                                                    UE

Step 501, Configuring
DM-RS resources by a
base station for UE
performing MU-MIMO

Step 502, Transmitting signaling indicating
DM-RS information by the base station to
the UE

Step 503, Generating a DM-RS and
transmitting the DM-RS in the configured
resources by the base station

Step 504, Estimating channels
by using the DM-RS according
to the signaling, so as to
support data demodulation of
high-dimension MU-MIMO

# Fig. 5

**OFDM symbol**

Ports 7, 8
Sequences 1, 2, 3, 4

■ CRS Port 0,1

■ CRS Port 2,3

■ CSI-RS

⊠ DM-RS

**Fig. 6**

**OFDM symbol**

Ports 7, 8
Sequences 1, 2

Ports 9, 10
Sequences 1, 2

■ CRS Port 0,1

■ CRS Port 2,3

■ CSI-RS

⊠ DM-RS

**Fig. 7**

Ports 7, 8
Sequences 1, 2, 3, 4

Ports 9, 10
Sequences 1, 2, 3, 4

OFDM symbol

CRS Port 0,1

CRS Port 2,3

CSI-RS

DM-RS

# Fig. 8

900

901

Signaling
transmitting unit

902

Resource
configuring unit

903

Transmitting unit

# Fig. 9

1000

Base station

210    200    230

Memory

220

CPU

Transceiver

# Fig. 10

1100

1101    1102

Signaling receiving
unit

Information
receiving unit

1103

Demodulating unit

# Fig. 11

EP 3 217 569 A1

1200

100

110

111

120 — Input unit

Communication
module
(transmitter/receiver)

Memory

CPU

Buffer — 141

130 131

Application/
function — 142

140 —

Data — 143

Audio
processor

132

Driver — 144

Display — 160

Power supply — 170

**Fig. 12**

1300

1301

1302

**Fig. 13**

26

# INTERNATIONAL SEARCH REPORT

| | International application No. |
|---|---|
| | PCT/CN2014/090646 |

## A. CLASSIFICATION OF SUBJECT MATTER

H04B 7/08 (2006.01) i

According to International Patent Classification (IPC) or to both national classification and IPC

## B. FIELDS SEARCHED

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNABS, CNKI: demodulation reference signal, multiple-input multiple-output, multiuser, base station, signalling

VEN: DM-RS, MIMO, base station, BS, MU, signaling

## C. DOCUMENTS CONSIDERED TO BE RELEVANT

| Category* | Citation of document, with indication, where appropriate, of the relevant passages | Relevant to claim No. |
|---|---|---|
| X | CN 102882566 A (HUAWEI TECHNOLOGIES CO., LTD.), 16 January 2013 (16.01.2013), description, paragraphs [0006]-[0024] | 1-3, 9-10, 14-20 |
| A | CN 102122984 A (NTT DOCOMO INC.), 13 July 2011 (13.07.2011), the whole document | 1-20 |
| A | CN 102076076 A (SHARP CORPORATION), 25 May 2011 (25.05.2011), the whole document | 1-20 |
| A | CN 101827393 A (ZTE CORP.), 08 September 2010 (08.09.2010), the whole document | 1-20 |
| A | CN 102237961 A (NTT DOCOMO INC.), 09 November 2011 (09.11.2011), the whole document | 1-20 |

☐ Further documents are listed in the continuation of Box C.　　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 June 2015 (01.06.2015) | 06 July 2015 (06.07.2015) |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer LI, Xiaopeng Telephone No.: (86-10) 62412002 |
|---|---|

Form PCT/ISA/210 (second sheet) (July 2009)

## INTERNATIONAL SEARCH REPORT
### Information on patent family members

| | International application No. |
|---|---|
| | **PCT/CN2014/090646** |

| Patent Documents referred in the Report | Publication Date | Patent Family | Publication Date |
|---|---|---|---|
| CN 102882566 A | 16 January 2013 | None | |
| CN 102122984 A | 13 July 2011 | JP 2011142620 A | 21 July 2011 |
| | | JP 5661441 B2 | 28 January 2015 |
| CN 102076076 A | 25 May 2011 | EP 2502374 A1 | 26 September 2012 |
| | | US 8934430 B2 | 13 January 2015 |
| | | US 2015092722 A1 | 02 April 2015 |
| | | WO 2011062066 A1 | 26 May 2011 |
| | | EP 2502374 A4 | 14 January 2015 |
| | | US 2012207119 A1 | 16 August 2012 |
| | | KR 101384505 B1 | 10 April 2014 |
| | | JP 2013511855 A | 04 April 2013 |
| | | KR 20120060900 A | 12 June 2012 |
| CN 101827393 A | 08 September 2010 | WO 2011116593 A1 | 29 September 2011 |
| CN 102237961 A | 09 November 2011 | JP 2011239396 A | 24 November 2011 |
| | | EP 2385645 A2 | 09 November 2011 |
| | | US 2011274197 A1 | 10 November 2011 |

Form PCT/ISA/210 (patent family annex) (July 2009)